# EUROPÄISCHE PATENTSCHRIFT

(11) **EP 1 555 146 B1**
(45) Veröffentlichungstag und Bekanntmachung des Hinweises auf die Patenterteilung: **17.01.2007**
(21) Anmeldenummer: 04000523.3
(22) Anmeldetag: 13.01.2004
(51) Int. Cl.: B60H 1/00

(54) **Befestigungsvorrichtung für ein Expansionsventil einer Kraftfahrzeugklimaanlage**
Attaching device for an automotive air conditioning expansion valve
Dispositif de fixation d'une valve d'expansion d'un système de climatisation de véhicule

(43) Veröffentlichungstag der Anmeldung: 20.07.2005
(73) Patentinhaber: Frape Behr S.A., 08040 Barcelona (ES)
(72) Erfinder: Santanach, Francesc, 08024 Barcelona (ES); Guzman, Jorge, 08004 Barcelona (ES); Blasco, Jose Cremades, 08902 L'Hospitalet(BCN) (ES)
(74) Vertreter: Grauel, Andreas

(56) Entgegenhaltungen:
- WO-A-01/74615
- FR-A- 2 834 672
- PATENT ABSTRACTS OF JAPAN Bd. 1997, Nr. 09, 30. September 1997 (1997-09-30) & JP 9 123749 A (SHOWA ALUM CORP), 13. Mai 1997 (1997-05-13)
- PATENT ABSTRACTS OF JAPAN Bd. 1998, Nr. 09, 31. Juli 1998 (1998-07-31) & JP 10 100654 A (CALSONIC CORP), 21. April 1998 (1998-04-21)
- PATENT ABSTRACTS OF JAPAN Bd. 2000, Nr. 10, 17. November 2000 (2000-11-17) & JP 2000 203251 A (ZEXEL CORP), 25. Juli 2000 (2000-07-25)

## Beschreibung

Die Erfindung betrifft eine Befestigungsvorrichtung für ein Expansionsventil einer Kraftfahrzeug-Klimaanlage.

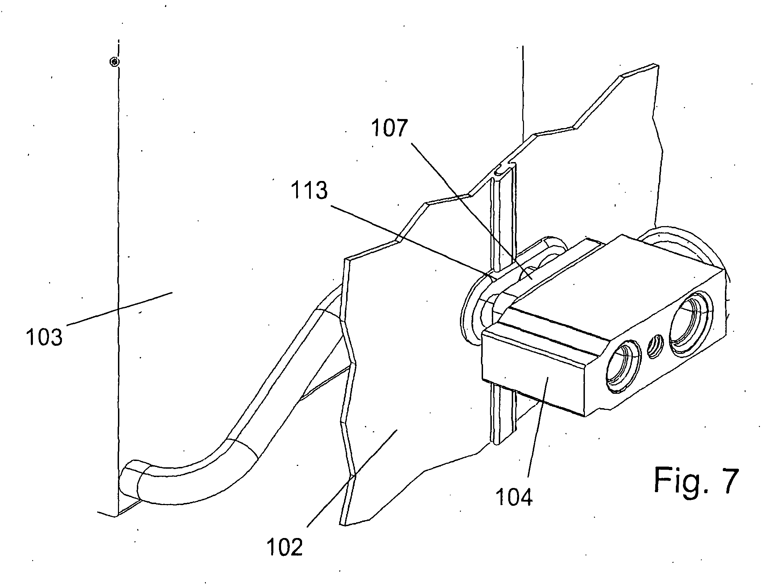

Herkömmlicherweise werden, wie in den Figuren 7 bis 9 dargestellt, zur Befestigung eines Expansionsventils 104 die zu einem Verdampfer 103 führende und die von dem Verdampfer 103 kommende Leitung durch eine mittels eines Dichtelements 113 abgedichtete Gehäuse-Öffnung eines mehrteiligen Gehäuses 102 geführt, mittels eines Leitungs-Positionierungs-Elements 107 positioniert und das Leitungs-Positionierungs-Element 107 mittels zweier Schrauben am Expansionsventil 104 festgeschraubt. Hierbei ist das Leitungs-Positionierungs-Element 107 in seiner Größe möglichst klein gehalten.

Auf der anderen Seite des Expansionsventils 104 erfolgt die Positionierung und Befestigung der Anschlussleitungen entsprechend, wobei zur Fixierung des zweiten Leitungs-Positionierungs-Elements 107 eine zentrale Schraube vorgesehen ist. Bei der Befestigung treten jedoch häufig hohe Torsionskräfte auf, wodurch Probleme, insbesondere bei der geringen Steifigkeit im Falle einer Nocoloc®-Verlötung, auftreten.

Die Gattungsgemäße WO 01/74615 offenbart eine derartige Befestigungsvorrichtung.

Es ist Aufgabe der Erfindung, eine verbesserte Befestigungsvorrichtung für ein Expansionsventil einer Kraftfahrzeug-Klimaanlage zur Verfügung zu stellen.

Diese Aufgabe wird gelöst durch eine Befestigungsvorrichtung für ein Expansionsventil mit den Merkmalen des Anspruchs 1, und durch eine Klimaanlage mit den Merkmalen des Anspruchs 13. Vorteilhafte Ausgestaltungen sind Gegenstand der Unteransprüche.

Erfindungsgemäß ist eine Befestigungsvorrichtung für ein Expansionsventil einer Kraftfahrzeug-Klimaanlage vorgesehen, wobei dass das Expansionsventil mit Hilfe des Leitungs-Positionierungs-Elements an einem Gehäuse anbringbar und zumindest verdrehfest fixierbar ist, in dem ein Teil der Kraftfahrzeug-Klimaanlage, insbesondere der Verdampfer, angeordnet ist. Durch die drehsichere Anbringung am Gehäuse kann auf einfache Weise ein Verdrehen beim Anschrauben des zweiten Leitungs-Positionierungs-Elements am Expansionsventil verhindert werden.

Hierbei sind zwei Schlitze zur Aufnahme der Leitungen im Leitungs-Positionierungs-Element vorgesehen, die zur Erleichterung der Montage bevorzugt parallel zueinander angeordnet sind.

Vorzugsweise sind im Leitungs-Positionierungs-Element zwei weitere Schlitze oder Durchgangsbohrungen vorgesehen, die zur Positionierung und/oder Befestigung des Leitungs-Positionierungs-Elements am Gehäuse dienen. Sind zwei in Längsrichtung des Leitungs-Positionierungs-Elements verlaufende Schlitze vorgesehen, so können diese auf entsprechend am Gehäuse ausgebildete Vorsprünge geschoben oder gepresst werden, so dass ein Verdrehen verhindert wird. Im Falle von Durchgangsbohrungen können Schrauben in am Gehäuse vorgesehene Schraubdome eingeschraubt werden, so dass ebenfalls eine drehsichere Befestigung möglich ist.

Alternativ kann das Leitungs-Positionierungs-Element derart ausgebildet sein, dass es deutlich über das Expansionsventil übersteht und in am Gehäuse ausgebildete oder hieran angebrachte taschenförmig ausgebildete Aufnahmen geschoben wird, welche das Leitungs-Positionierungs-Element und somit auch das an demselben fixierte Expansionsventil drehsicher halten. Bevorzugt sind in Einschubrichtung verlaufende Rippen vorgesehen, welche das Leitungs-Positionierungs-Element ausreichend beabstandet, insbesondere in Hinblick auf ein am Gehäuse vorgesehenes Dichtelement, vom Gehäuse halten.

Andere Befestigungsmöglichkeiten des Leitungs-Positionierungs-Elements am Gehäuse oder eine Kombination der beschriebenen Befestigungsvorrichtungen sind ebenfalls möglich.

Zur Befestigung des Expansionsventils am Leitungs-Positionierungs-Element ist mindestens eine Bohrung, bevorzugt zwei Bohrungen, im Leitungs-Positionierungs-Element zum Durchstecken einer Schraube und zum Einschrauben derselben in dem Expansionsventil vorgesehen.

Das Gehäuse ist bevorzugt mehrteilig ausgebildet, wobei eine Gehäuse-Fuge quer durch den gehäuseseitigen Teil der Befestigungsvorrichtung verläuft. Dies erleichtert insbesondere den Zusammenbau. Hierbei ist bevorzugt in der Gehäuse-Fuge eine Öffnung vorgesehen, durch die mindestens eine Leitung ragt, welche mit dem Expansionsventil verbunden ist.

Eine derartige Befestigungsvorrichtung für ein Expansionsventil wird insbesondere für Kraftfahrzeug-Klimaanlagen zur Befestigung eines in der Nähe des Verdampfers angeordneten Expansionsventils verwendet.

Im Folgenden wird die Erfindung anhand von Ausführungsbeispielen unter Bezugnahme auf die Zeichnung im Einzelnen erläutert. In der Zeichnung zeigen:

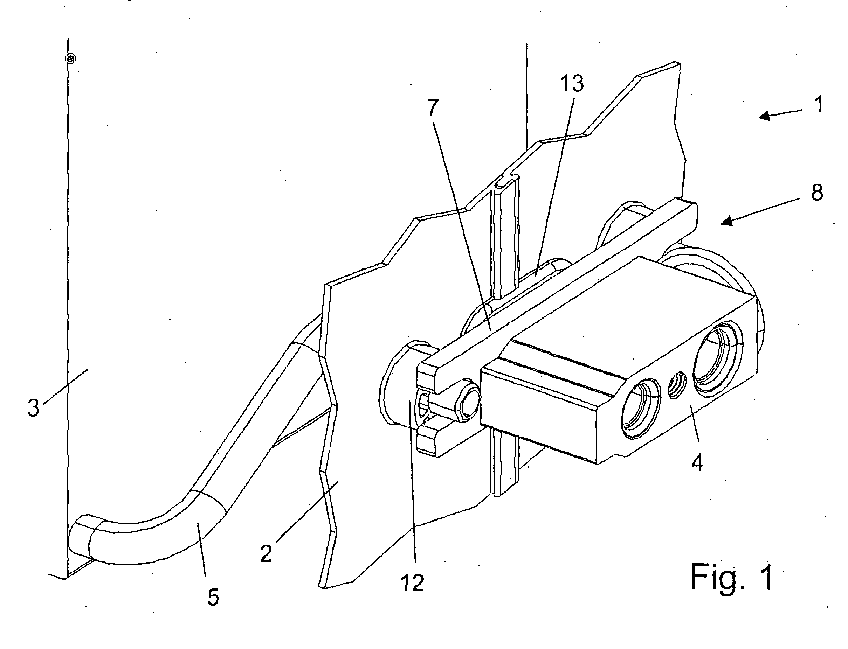

- Fig. 1: eine perspektivische Ansicht einer eingebauten erfindungsgemäßen Befestigungsvorrichtung gemäß einem ersten Ausführungsbeispiel,

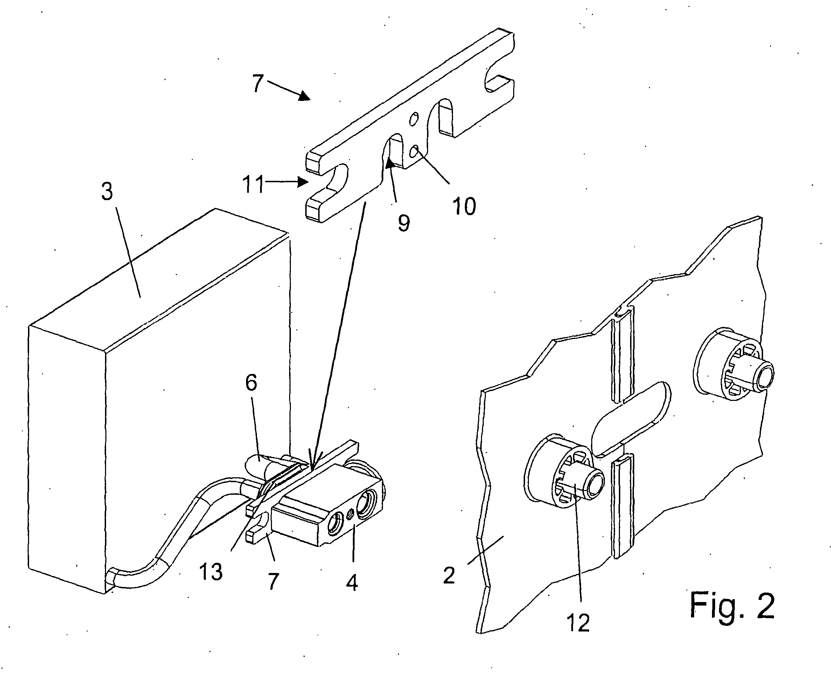

- Fig. 2: eine Darstellung der Teile von Fig. 1,

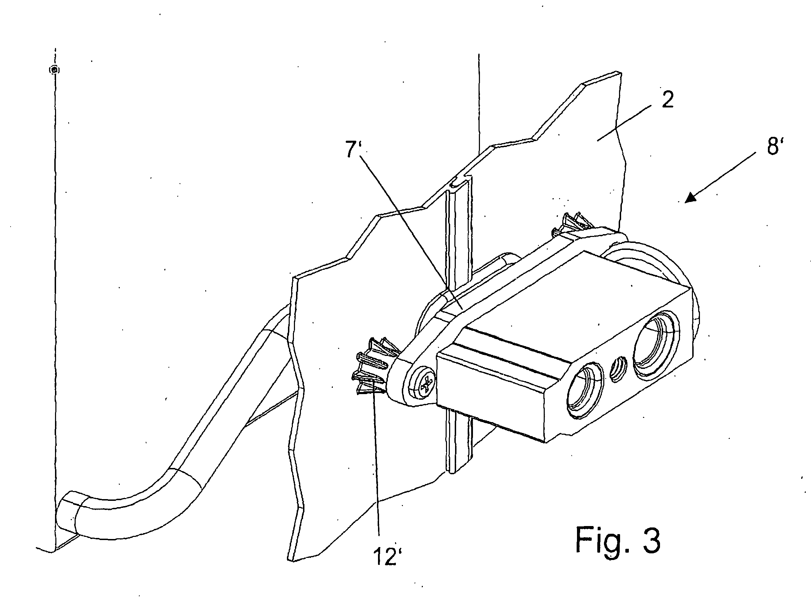

- Fig. 3: eine perspektivische Ansicht einer eingebauten erfindungsgemäßen Befestigungsvorrichtung gemäß einem zweiten Ausführungsbeispiel,

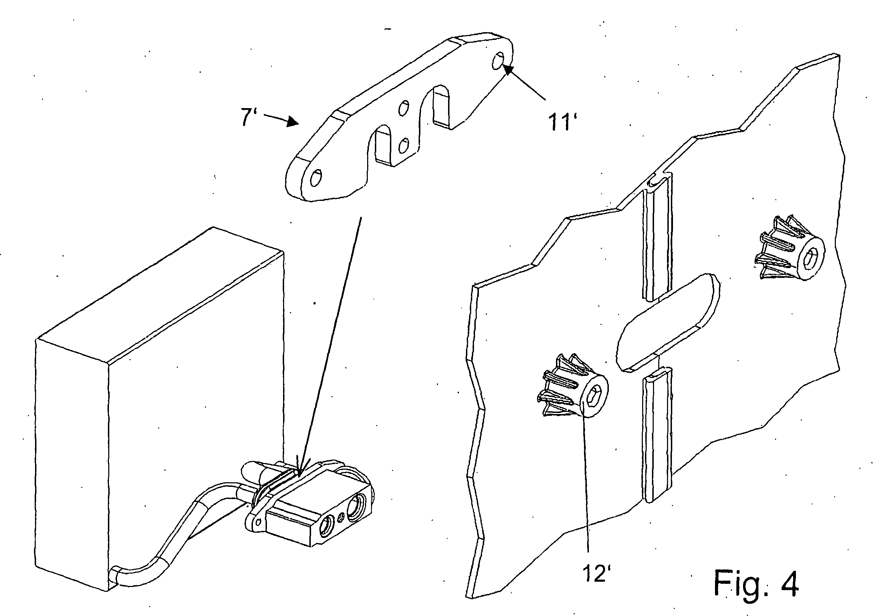

- Fig. 4: eine Darstellung der Teile von Fig. 3,
- Fig. 5: eine perspektivische Ansicht einer eingebauten erfindungsgemäßen Befestigungsvorrichtung gemäß einem dritten Ausführungsbeispiel,
- Fig. 6: eine Darstellung der Teile von Fig. 5,
- Fig. 7: eine perspektivische Ansicht einer eingebauten Befestigungsvorrichtung gemäß dem Stand der Technik,
- Fig. 8: eine Darstellung der auftretenden Torsionskraft bei der Befestigungsvorrichtung von Fig. 7, und
- Fig. 9: eine Darstellung der Teile von Fig. 7.

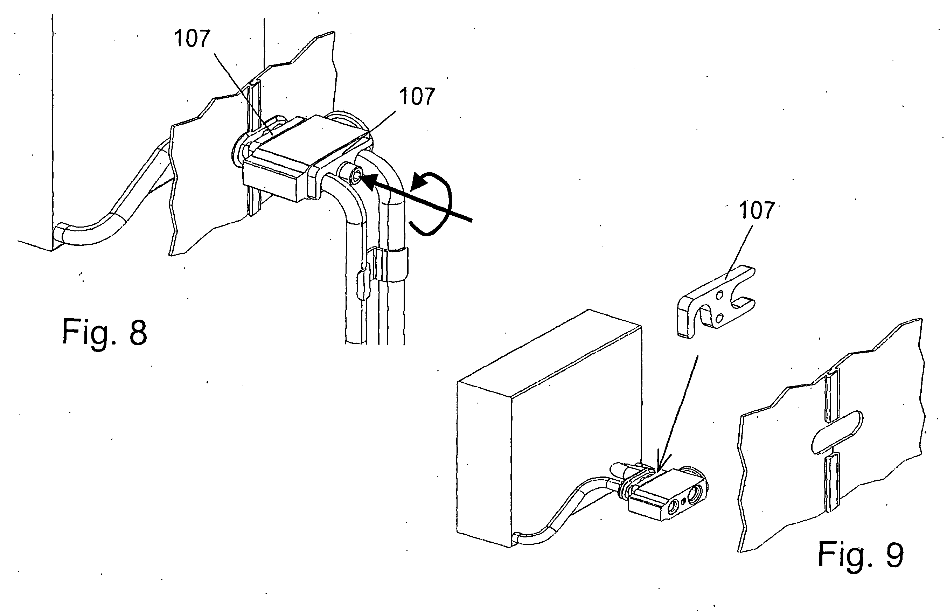

Eine Kraftfahrzeug-Klimaanlage 1 mit einem in einem mehrteilig ausgebildeten Gehäuse 2 angeordneten Verdampfer 3 weist ein Expansionsventil 4 auf. Das Expansionsventil 4 ist in einer ersten Leitung 5 und einer zweiten Leitung 6 angeordnet, über die dem Verdampfer 3 Kältemittel zugeleitet oder von ihm abgeführt werden kann. Hierbei ist in den Figuren jeweils nur der mit dem Verdampfer 3 verbundene Abschnitt der Leitungen 5 und 6 dargestellt, wobei die jeweiligen Rohre am Expansionsventil 4 enden. Bezüglich des weiteren Verlaufs der Leitungen und der Anbringung der entsprechenden Rohre am Expansionsventil 4 sei auf den in Fig. 8 dargestellten Stand der Technik hingewiesen.

Die beiden vom Verdampfer 3 kommenden Leitungen 5 und 6 sind mittels eines flach und etwa rechteckförmig ausgebildeten Leitungs-Positionierungs-Elements 7, welches Teil einer Befestigungsvorrichtung 8 ist, in ihrem Abstand im Bereich der Anschlussstellen zueinander vorpositioniert, wofür das Leitungs-Positionierungs-Element 7 mit zwei parallel zueinander verlaufenden, sich von einer Längsseite senkrecht zur Mittellängsachse hin erstrekkenden Schlitzen 9 versehen ist.

Zur Anbringung des Leitungs-Positionierungs-Elements 7 am Expansionsventil 4 sind zwei Bohrungen 10 im Leitungs-Positionierungs-Element 7 vorgesehen, durch welche Schrauben gesteckt und in entsprechende, im Expansionsventil 4 vorgesehene Gewindebohrungen geschraubt werden, so dass das Leitungs-Positionierungs-Element 7 die Leitungen 5 und 6 am Expansionsventil 4 fixiert.

Zur Anbringung des Leitungs-Positionierungs-Elements 7 am Gehäuse 2 sind im Leitungs-Positionierungs-Elements 7 zwei weitere Schlitze 11 vorgesehen, die sich in Längsrichtung des Leitungs-Positionierungs-Elements 7 aufeinander zu erstrecken.

Das spritzgegossene Gehäuse 2 besteht aus einem Kunststoff, beispielsweise PP-20T. Hierbei sind zwei Vorsprünge 12 ausgebildet, die den weiteren Schlitzen 11 des Leitungs-Positionierungs-Elements 7 entsprechend angeordnet und geformt sind, so dass das Leitungs-Positionierungs-Element 7 am Gehäuse 2 positioniert und insbesondere drehsicher angebracht werden kann, so dass beim Einschrauben der letzten Schraube (siehe Fig. 8), die zur Anbringung eines zweiten Leitungs-Positionierungs-Elements (nicht dargestellt, vergleiche aber den unter Bezugnahme auf die Figuren 8 und 9 beschriebenen Stand der Technik) dient, kein Verdrehen des Expansionsventils 4 und der Leitungen 5, 6 erfolgen kann.

Das zweite Leitungs-Positionierungs-Element kann entsprechend dem Leitungs-Positionierungs-Element 107 gemäß dem Stand der Technik ausgebildet sein. Dies stellt zudem sicher, dass die beiden Leitungs-Positionierungs-Elemente 7 und 107 nicht so leicht wie bisher verwechselt werden können, da sie sich in ihrer Form und nicht nur durch die Anzahl und Anordnung der Bohrungen unterscheiden.

Zur Abdichtung des Gehäuses 2 ist ein Dichtelement 13 vorgesehen, durch welches die Öffnung im Gehäuse 2, durch die die beiden Leitungen 5 und 6 verlaufen, unter Aufnahme der Leitungen 5 und 6 dicht verschlossen wird. Zum Schutz des Dichtelements 13 ist der Vorsprung 12 zweistufig ausgebildet, so dass das Leitungs-Positionierungs-Element 7 beabstandet von der Gehäusewand angeordnet ist.

Das zweite Ausführungsbeispiel entspricht im Wesentlichen dem ersten Ausführungsbeispiel, so dass im Folgenden nur auf die Unterschiede näher eingegangen wird.

An Stelle der in Längsrichtung des Leitungs-Positionierungs-Elements 7 verlaufenden Schlitze 11 ist in den Endbereichen des Leitungs-Positionierungs-Elements 7' gemäß dem zweiten Ausführungsbeispiel je eine Durchgangsbohrung 11' vorgesehen, durch die je eine Schraube gesteckt und in einen der in diesem Fall als Schraubdome ausgebildeten Vorsprünge 12' geschraubt ist. Die Schraubdome stellen unter anderem einen ausreichenden Abstand zwischen Gehäusewand und Leitungs-Positionierungs-Element 7' sicher.

Die durch das Leitungs-Positionierungs-Element 7' in Verbindung mit den Vorsprüngen 12' des Gehäuses 2 gebildete Befestigungsvorrichtung 8' gemäß dem zweiten Ausführungsbeispiel ermöglicht eine sichere Fixierung, nicht nur in Hinblick auf die Sicherheit gegenüber einem möglichen Verdrehen beim Einschrauben der letzten Schraube (vgl. Fig. 8).

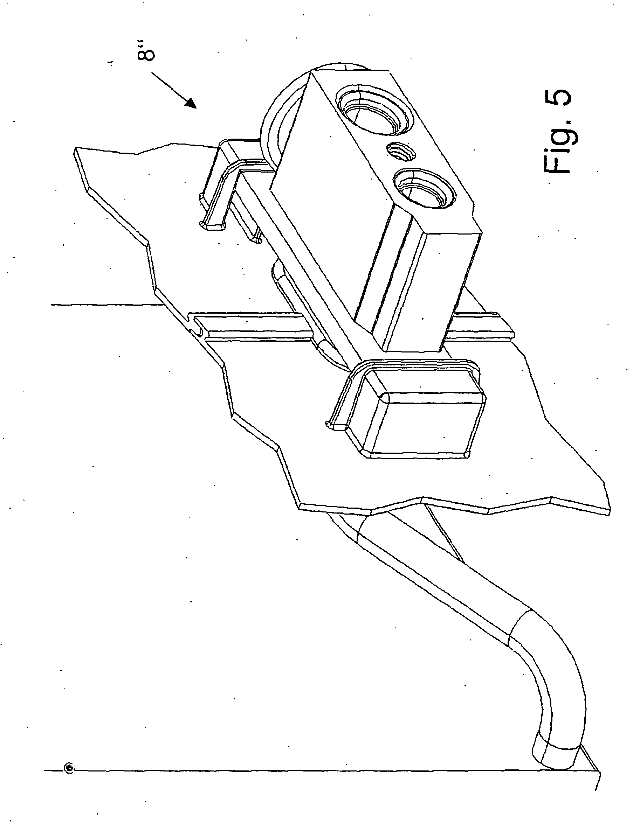

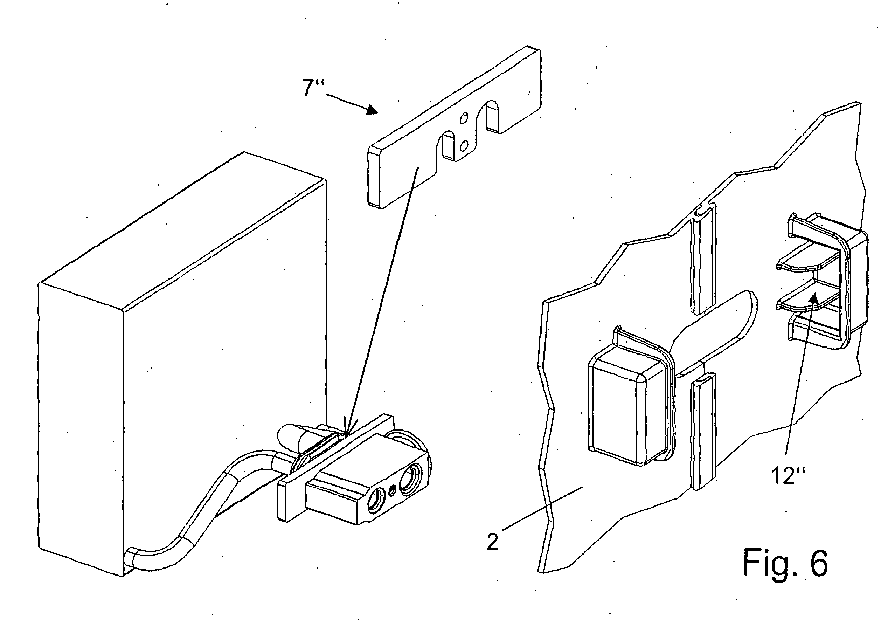

Gemäß einem in den Figuren 5 und 6 dargestellten dritten Ausführungsbeispiel, das mit dem ersten und zweiten Ausführungsbeispiel im Wesentlichen übereinstimmt, so dass im Folgenden nur die Unterschiede näher erläutert werden, erfolgt die Drehsicherung des Leitungs-Positionierungs-Elements 7" formschlüssig mittels taschenartig ausgebildeter Vorsprünge 12" die am Gehäuse 2 ausgebildet sind, wobei das Leitungs-Positionierungs-Element 7" eine im Wesentlichen rechteckförmige Gestalt hat. Die Vorsprünge 12" umfassen hierbei jeweils einen taschen- oder torförmigen Teil und zwei in Einführrichtung verlaufende, in ihrem vorderen Bereich abgerundete Rippen, welche der Führung beim Einführen des Leitungs-Positionierungs-Elements 7" und der Beabstandung desselben von der Gehäusewand dienen. Hierbei dienen wiederum das Leitungs-Positionierungs-Element 7" in Verbindung mit den Vorsprüngen 12" des Gehäuses 2 als Befestigungsvorrichtung 8". Die abschließende Fixierung erfolgt in diesem Fall gleichzeitig und automatisch mit dem Fixieren des aufgesetzten Gehäuseteils.

### Bezugszeichenliste

- 1: Kraftfahrzeug-Klimaanlage
- 2,102: Gehäuse
- 3,: 103 Verdampfer
- 4,: 104 Expansionsventil
- 5: Leitung
- 6: Leitung
- 7,: 7', 7", 107 Leitungs-Positionierungs-Element
- 8,: 8', 8" Befestigungsvorrichtung
- 9: Schlitz
- 10: Bohrungen
- 11: Schlitz
- 11': Durchgangsbohrung
- 12, 12', 12": Vorsprung
- 13, 113: Dichtelement

## Patentansprüche

1. Befestigungsvorrichtung für ein mit zwei Leitungen (5, 6) verbundenes Expansionsventil (4) einer Kraftfahrzeug-Klimaanlage (1), wobei die beiden Leitungen (5, 6) mittels eines als Blechstanzteil ausgebildeten Leitungs-Positionierungs-Elements (7; 7'; 7") mit zwei Schlitzen zur Aufnahme der Leitungen relativ zueinander positioniert sind, **dadurch gekennzeichnet, dass** das Expansionsventil (4) mit Hilfe des Leitungs-Positionierungs-Elements (7; 7'; 7") an einem Gehäuse (2) anbringbar und zumindest verdrehfest fixierbar ist, in dem ein Teil der Kraftfahrzeug-Klimaanlage (1) angeordnet ist.

2. Befestigungsvorrichtung nach Anspruch 1, **dadurch gekennzeichnet, dass** die zwei Schlitze (9) zur Aufnahme der Leitungen (5, 6) im Leitungs-Positionierungs-Element (7; 7'; 7") parallel zueinander angeordnet sind.

3. Befestigungsvorrichtung nach Anspruch 1 oder 2, **dadurch gekennzeichnet, dass** zwei weitere Schlitze (11) im Positionierungs-Element (7) vorgesehen sind, die zur Positionierung und/oder Befestigung des Leitungs-Positionierungs-Elements (7) am Gehäuse (2) dienen.

4. Befestigungsvorrichtung nach Anspruch 3, **dadurch gekennzeichnet, dass** die beiden weiteren Schlitze (11) an den Längsenden des Leitungs-Positionierungs-Elements (7) sich in einer Linie aufeinander zu erstrecken.

5. Befestigungsvorrichtung nach Anspruch 1 oder 2, **dadurch gekennzeichnet, dass** zwei Durchgangsbohrungen (11') im Positionierungs-Element (7') vorgesehen sind, die zur Positionierung und/oder Befestigung des Leitungs-Positionierungs-Elements (7') am Gehäuse (2) dienen.

6. Befestigungsvorrichtung nach Anspruch 5, **dadurch gekennzeichnet, dass** durch die Durchgangsbohrungen (11') Schrauben gestecht sind, die in als Schraubdome ausgebildete Vorsprünge (12') des Gehäuses (2) geschraubt sind.

7. Befestigungsvorrichtung nach Anspruch 1 oder 2, **dadurch gekennzeichnet, dass** das Positionierungs-Element (7") mit seinen längsseitigen Enden in zwei in als taschenförmige Aufnahmen ausgebildete Vorsprünge (12"), die am Gehäuse (2) ausgebildet sind, gesteckt ist.

8. Befestigungsvorrichtung nach Anspruch 7, **dadurch gekennzeichnet, dass** die taschenförmigen Aufnahmen der Führung und Beabstandung vom Gehäuse (2) dienende Rippen aufweisen.

9. Befestigungsvorrichtung nach einem der vorhergehenden Ansprüche, **dadurch gekennzeichnet, dass** die Befestigungsvorrichtung (8; 8'; 8") dazu geeignet ist, das Expansionsventil (4) auf der in Hinblick auf den Wärmetauscher (3) äußeren Seite des Gehäuses (2) anzubringen.

10. Befestigungsvorrichtung nach einem der vorhergehenden Ansprüche, **dadurch gekennzeichnet, dass** mindestens eine Bohrung (10) im Leitungs-Positionierungs-Element (7; 7'; 7") zum Durchstecken einer Schraube und zum Einschrauben derselben in dem Expansionsventil (4) vorgesehen ist.

11. Befestigungsvorrichtung nach einem der vorhergehenden Ansprüche, **dadurch gekennzeichnet, dass** das Gehäuse (2) mehrteilig ausgebildet ist, wobei eine Gehäuse-Fuge quer durch den gehäuseseitigen Teil der Befestigungsvorrichtung (8; 8'; 8") verläuft.

12. Befestigungsvorrichtung nach Anspruch 11, **dadurch gekennzeichnet, dass** in der Gehäuse-Fuge eine Öffnung vorgesehen ist, durch die mindestens eine Leitung (5, 6) ragt, welche mit dem Expansionsventil (4) verbunden ist.

13. Klimaanlage für ein Kraftfahrzeug, **gekennzeichnet durch** eine Befestigungsvorrichtung (8; 8'; 8") für ein Expansionsventil (4) gemäß einem der Ansprüche 1 bis 12.

## Claims

1. An attaching device for an expansion valve (4) in a motor vehicle air conditioning system (1) which is connected to two lines (5, 6), said two lines (5, 6) being positioned in relation to one another by means of a line positioning element (7; 7'; 7") in the form of a stamped plate part with two slits for receiving the lines,
**characterised in that**
the expansion valve (4) can be mounted by means of the line positioning element (7; 7'; 7") and fixed at least in such a manner that it is unable to rotate on a housing (2) in which part of the motor vehicle air conditioning system (1) is positioned.

2. An attaching device in accordance with claim 1,
**characterised in that**
the two slits (9) for receiving the lines (5, 6) in the line positioning element (7; 7'; 7") are positioned parallel to one another.

3. An attaching device in accordance with claim 1 or 2,
**characterised in that**
provided in the positioning element (7) are two further slits (11) which serve to position and/or attach the line positioning element (7) on/to the housing (2).

4. An attaching device in accordance with claim 3,
**characterised in that**
the two further slits (11) at the longitudinal ends of the line positioning element (7) extend in a line.

5. An attaching device in accordance with claim 1 or 2,
**characterised in that**
provided in the positioning element (7') are two holes (11') which serve to position and/or attach the line positioning element (7') on/to the housing (2).

6. An attaching device in accordance with claim 5,
**characterised in that**
screws which are screwed into projections (12') in the housing (2) designed as screw domes are punched through the holes (11').

7. An attaching device in accordance with claim 1 or 2,
**characterised in that**
the longitudinal ends of the positioning element (7") are inserted into two projections (12") in the housing (2) designed as pocket-shaped receivers.

8. An attaching device in accordance with claim 7,
**characterised in that**
the pocket-shaped receivers have ribs which serve to guide them and distance them from the housing (2).

9. An attaching device in accordance with one of the preceding claims,
**characterised in that**
the attaching device (8; 8'; 8") is suitable for mounting the expansion valve (4) on the outer side of the housing (2) in relation to the heat exchanger (3).

10. An attaching device in accordance with one of the preceding claims,
**characterised in that**
provided in the line positioning element (7; 7'; 7") is at least one hole (10) into which a screw is inserted in order to be screwed into the expansion valve (4).

11. An attaching device in accordance with one of the preceding claims,
**characterised in that**
the housing (2) is designed in several parts, a housing joint running at right angles though the part of the attaching device (8; 8'; 8") on the housing side.

12. An attaching device in accordance with claim 11,
**characterised in that**
provided in the housing joint is an opening through which passes at least one line (5, 6) which is connected to the expansion valve (4).

13. An air conditioning system for a motor vehicle,
**characterised by**
an attaching device (8; 8'; 8") for an expansion valve (4) in accordance with one of claims 1 to 12.

## Revendications

1. Dispositif de fixation pour un détenteur (4) d'un système de climatisation (1) d'un véhicule automobile, raccordé à deux conduites (5, 6), où les deux conduites (5, 6) sont positionnées au moyen d'un élément de positionnement des conduites (7 ; 7' ; 7") configuré comme une pièce en tôle découpée comprenant deux fentes servant au logement des conduites l'une par rapport à l'autre, **caractérisé en ce que** le détendeur (4) peut être fixé sur un carter (2) et au moins installé, fixe en rotation, à l'aide de l'élément de positionnement des conduites (7 ; 7' ; 7"), carter dans lequel est disposée une partie du système de climatisation (1) du véhicule automobile.

2. Dispositif de fixation selon la revendication 1, **caractérisé en ce que** les deux fentes (9) servant au logement des conduites (5, 6) dans l'élément de positionnement des conduites (7; 7' ; 7") sont disposées en étant parallèles entre elles.

3. Dispositif de fixation selon la revendication 1 ou 2, **caractérisé en ce qu'**il est prévu, dans l'élément de positionnement (7), deux autres fentes (11) qui servent au positionnement et / ou à la fixation, sur le carter (2), de l'élément de positionnement des conduites (7).

4. Dispositif de fixation selon la revendication 3, **caractérisé en ce que** les deux autres fentes (11) s'étendent en formant une ligne, l'une par rapport à l'autre, au niveau des extrémités longitudinales de l'élément de positionnement des conduites (7).

5. Dispositif de fixation selon la revendication 1 ou 2, **caractérisé en ce qu'**il est prévu, dans l'élément de positionnement (7'), deux perçages (11') qui servent au positionnement et / ou à la fixation, sur le carter (2), de l'élément de positionnement des conduites (7').

6. Dispositif de fixation selon la revendication 5, **caractérisé en ce que** des vis sont placées à travers les perçages (11'), vis qui sont vissées dans des parties saillantes (12') du carter (2), configurées comme des dômes de vis.

7. Dispositif de fixation selon la revendication 1 ou 2, **caractérisé en ce que** l'élément de positionnement (7"), par ses extrémités du grand côté, est fiché dans deux parties saillantes (12") configurées comme dans des logements en forme de poche, parties saillantes qui sont formées sur le carter (2).

8. Dispositif de fixation selon la revendication 7, **caractérisé en ce que** les logements en forme de poche présentent des nervures servant au guidage et à l'espacement par rapport au carter (2).

9. Dispositif de fixation selon l'une quelconque des revendications précédentes, **caractérisé en ce que** le dispositif de fixation (8 ; 8' ; 8") est approprié pour fixer le détendeur (4) sur le côté extérieur du carter (2), par rapport à l'échangeur de chaleur (3).

10. Dispositif de fixation selon l'une quelconque des revendications précédentes, **caractérisé en ce qu'**il est prévu au moins un perçage (10) dans l'élément de positionnement des conduites (7 ; 7' ; 7") servant à faire passer une vis et à la visser dans le détendeur (4).

11. Dispositif de fixation selon l'une quelconque des revendications précédentes, **caractérisé en ce que** le carter (2) est conçu en plusieurs parties, où un joint du carter traverse la partie, côté carter, du dispositif de fixation (8 ; 8' ; 8").

12. Dispositif de fixation selon la revendication 11, **caractérisé en ce qu'**il est prévu, dans le joint du carter, une ouverture dans laquelle pénètre au moins une conduite (5, 6) qui est raccordée au détendeur (4).

13. Système de climatisation pour un véhicule automobile, **caractérisé par** un dispositif de fixation (8 ; 8' ; 8") pour un détendeur (4) selon l'une quelconque des revendications 1 à 12.
